# EUROPEAN PATENT APPLICATION

(11) **EP 4 365 143 A1**
(43) Date of publication of application: **08.05.2024**
(21) Application number: 22205450.4
(22) Date of filing: 04.11.2022
(51) Int. Cl.: C03B 40/027, G05B 19/00

(54) **GLASS FORMING SYSTEM AND METHOD FOR OPERATING THE SAME**

(71) Applicant: Emhart Glass S.A., 6312 Steinhausen (CH)
(72) Inventor: DIEHM, Leo, 6330 Cham (CH); BEWER, Dr. Thomas Alexander, 8805 Richterswil (CH); GRONBLAD, Martin, 85651 Sundsvall (SE); ESPINOSA, Daniel, 85242 Sundsvall (SE)
(74) Representative: Gille Hrabal Partnerschaftsgesellschaft mbB Patentanwälte

(57) **Abstract**

The invention relates to a glass forming system and to a method for operating a glass forming system. A glass forming system (30) comprises a forming surface (4) for forming glass items (14, 26), a lubricating device (45) for lubricating the forming surface (4) and a measuring device (40) for measuring a parameter relating to a wall thickness of a formed glass item (14, 26). The glass forming system (30) is configured such that a lubrication performed by the lubricating device (45) can be evaluated and/or controlled on the basis of the measured parameter. This allows for a particularly accurate evaluation and control of lubrication.

## Description

The invention relates to a glass forming system, a method for operating a glass forming system and a use of a measuring device.

A glass forming system may comprise a blank station for forming parisons from gobs of molten glass. The blank station may include a plunger and a blank mould. The blank mould may consist of two blank mould halves. The blank mould halves can be moved between an open position and a closed position. There may be a neck ring below the blank mould. A gob of molten glass can be brought into the blank mould from above. The upper opening of the blank mould can be closed by a baffle.

The plunger can come from below through the neck ring moving into the blank mould. The ascending movement of the plunger can pierce a gob of molten glass when a molten gob is within the blank mould and when the upper opening of the blank mould is closed. The blank station can form a parison in this way. After forming the parison, the upper opening and the blank mould will be opened. The two mould halves will be moved to their open position.

A glass forming system may comprise a blow station for forming a glass item such as a container, e.g. a bottle, from the parison. The blow station can form a finished product out of the parison. The blow station may comprise a blow mould which may consist of two blow mould halves. The blow station may include a blowing device to blow up a parison when the parison is in the blow mould. The above-mentioned features and configurations may be combined with the aspects listed below as well as with the embodiments and configurations thereof.

The glass forming surfaces, which come in direct contact with the molten or plastically deformable glass, require lubrication in order to achieve a uniform and constant product quality over time. Lubrication ensures an even distribution of the glass material being introduced within the mould cavity and simplifies the removal of the preform, which may still be mechanically unstable, from the mould. A major source of visible defects on the surface of the finished product is the relatively violent contact of the molten glass with the respective forming surface, e.g. the contact of the parison with the surface of the blank mould cavity during charging if no or not enough lubricant is present. Document WO 2007 / 138 226 A1 teaches to lubricate or swab a mould by means of a spray tube carried by a swab robot. Swabbing of a glass forming surface is also known from US 5 746 800 A, GB 966 879 A, WO 2017 / 032 883 A1, US 2006 144 088 AA, US 5 679 409 A, DE 10 2008 046 655 B3, EP 3 800 166 A1, DE 3 007 512 B1, US 3 988 137, US 4 604 120 A, and US 4 861 363 A.

Known swabbing (lubrication) techniques rely on fixed and continuous patterns that have been known to be effective for years. Typically, constant lubrication frequencies are used for each job run. Very often, lubrication is activated manually by the operator. Therefore, lubricant is applied in a frequency irrespective of the actual need. Thus, the quality of the produced glass items is inconsistent. In addition, each lubrication imposes a disturbance on the forming process. Unnecessary lubrication thus affects the quality of formed glass items and may lead to defects and production losses.

The task of the invention is to provide a further developed glass forming system, method and use, which, in particular, resolve at least one of the mentioned drawbacks of the prior art.

The task is solved by the glass forming system according to claim 1 and by the method for operating a glass forming system and the use of a measuring device according to the additional claims. Advantageous embodiments result from the subclaims.

A glass forming system serves to solve the task. The glass forming system comprises a forming surface for forming glass items, a lubricating device for lubricating the forming surface and a measuring device for measuring a parameter relating to a wall thickness of a formed glass item or to the forming surface. The glass forming system is configured such that a lubrication performed by the lubricating device can be evaluated and/or controlled on the basis of the measured parameter.

It has been found that the wall thickness of a formed glass item is an ideal indicator for a current lubrication state of a forming surface. Therefore, a parameter relating to a wall thickness is a suitable basis to evaluate or control lubrication. The same applies to a parameter relating to the forming surface. Evaluation of lubrication leads to a quick detection of any lubrication faults which allows for a quick solution. Control of lubrication enables to lubricate based on the actual need and, thus, to ensure high quality while saving lubricant and time. A further advantage is that such a measurement device may already be present in order to evaluate the quality of formed glass items. This can now be used for a further purpose.

The measured parameter relates to a previously formed glass item, in particular using the forming surface. As lubrication is evaluated or controlled on the basis of the measured parameter, a feedback is provided. An outcome of a previous lubrication process or glass forming process is used to evaluate and/or control a current lubrication process. Lubrication quality can be determined and/or lubrication can be adjusted in a closed loop.

A parameter relating to a wall thickness of a formed glass item is a parameter which is responsive to the wall thickness of the glass item. In other words, the parameter varies with varying wall thickness of the glass item. Thus, the parameter may be used as a measure for the wall thickness, in particular if any other influence factors are constant. For example, the wall thickness itself can be used. However, as described below, other parameters such as the thermal intensity have also proven to be advantageous. In this case, the measured parameter is not the wall thickness itself. A parameter relating to the forming surface can e.g. be a parameter relating to the blank mould. Advantageously, a temperature of the forming surface can be used. This can be measured e.g. by a thermal (infrared) camera as the measuring device. The measuring device typically comprises one or more sensors to sense the respective parameter.

The glass forming system is suitable for forming glass items from molten glass and/or plastically deformable glass. The system may be realized as a one-piece apparatus or composed of several parts.

All surfaces which contact molten or plastically deformable glass during a glass forming process are referred to as forming surfaces. This is due to the fact that typically at least a part of the glass takes on the shape of the respective surface. The forming surface may for example be part of a mould for glass forming, such as a blank mould or a blow mould, of a baffle, a plunger, a neck ring or a deflector.

The lubricating device is configured to lubricate at least a part of the forming surface. The quality of the formed glass items is increased by lubrication. This is especially true for the bottom region of a container such as a bottle. The lubricant application is particularly uniform and the lubrication effect is particularly good when the lubricant is sprayed. This is the case in particular in comparison to the use of brushes or wiping lubricants. Thus, in an advantageous configuration, the lubricating device is configured to spray lubricant, e.g. comprising oil and/or graphite, by means of at least one nozzle.

There may be an evaluation and/or control device for evaluating and/or controlling a lubrication performed by the lubricating device based on the measured parameter. The evaluation and/or control device may be part of the glass forming system or provided as an external device. The evaluation and/or control device may further be configured to control some or all functions of the glass forming system.

In one embodiment, the glass forming system is configured such that a decision is made, on the basis of the measured parameter, whether or not lubrication is necessary. Lubrication is then only performed when necessary. This may also be referred to as "swabbing on demand". The lubrication interval or frequency may be adapted to the actual requirements.

The decision can be made for a region of the formed glass item, i.e. relating to a region of the forming surface. If the lubrication state of the forming surface or of the respective region is insufficient, lubrication of the forming surface or of the respective region of the forming surface is performed. This allows to achieve a particularly constant lubrication state and, thus, a constant quality of the formed glass items. In addition, lubricant can be saved.

In particular, a too low intensity value may indicate that lubrication is necessary. For example, lubrication may be necessary if an intensity value is smaller than an average of a previous time series of measured values, in particular multiplied with a factor. The factor may be, for example, between 0.8 and 0.99. Thus, a value which is more than 20% or more than 10% below the average, for example, is considered too low. As a consequence, lubrication is performed.

If lubrication is necessary, an instruction may be given to the lubricating device to perform lubrication. In particular, the glass forming system comprises a decision-making device for making the decision. The decision-making device may be part of an evaluation and/or control device.

In one configuration, the glass forming system is configured such that the measuring device measures the parameter for each formed glass item. This enables complete evaluation and/or control. Alternatively, the parameter is measured for every second, every third or every fourth formed glass item. This enables a constant evaluation and/or control. The parameter may be measured for a larger interval of glass items to reduce the number of measurements.

In one embodiment, the glass forming system is configured such that at least one lubrication parameter of a lubrication performed by the lubricating device is set on the basis of the measured parameter. A lubrication parameter is a parameter of a lubrication to be performed by the lubricating device. In other words, the system performs lubrication on the basis of a previously measured parameter which relates to the wall thickness of a previously formed glass item. A feedback is thus implemented to control lubrication based on a previous lubrication. This may be performed by an evaluation and/or control device.

Lubrication parameters may be, for example, an amount of lubricant, a point in time and/or duration of lubrication, a lubrication interval, a lubrication speed, an order of lubrication or a lubricating position, e.g. if lubrication is only required at certain positions.

The glass forming system is in particular configured to determine the value of the lubrication parameter on the basis of the measured parameter and to set or adjust the determined lubrication parameter.

In one embodiment, the lubrication parameter is an amount of lubricant used for lubrication. In particular, it is determined how much lubricant is required. Lubrication is then performed with the required amount of lubricant. Thus, lubrication is only performed to the necessary extent. This allows to achieve a particularly high quality, as excessive lubrication which may lead to glass defects is impeded. Prior to this, it may be determined whether or not lubrication is necessary at all and the lubrication parameter may only be set if lubrication is necessary.

In one embodiment, a lubrication interval is increased when the measured parameter exceeds a predefined threshold. In particular, the lubrication interval is increased by a predefined increment, e.g. a certain number of formed glass items. The threshold may be based on an average of a previous time series of measured values, in particular multiplied with a peak factor. The peak factor may be, for example, between 1.05 and 1.5, in particular between 1.1 and 1.3. Thus, a peak which is more than 10% above the average, for example, is considered too high. As a consequence, the lubrication interval is increased to achieve overall fewer lubrications. The general aim is to flatten the curve of measured values as much as possible. This is based on the insight that too much lubrication leads to disturbance in the glass forming process. This embodiment enables to lubricate only if necessary and thus increases quality and decreases lubricant usage.

This can be repeated. If the following measured parameter still exceeds the threshold, the lubrication interval may be further increased, in particular by an increment which is smaller than the first increment. This is based on the insight that too little lubrication is detrimental for the quality, too. In the next step, the lubrication interval may be increased by an even smaller increment, and so on.

On the other hand, a lubrication interval may be decreased when the measured parameter falls below a predefined threshold.

In one embodiment, the measuring device is configured to measure the parameter in different regions of the formed glass item or of the forming surface, in particular in different height positions of the formed glass item or of the forming surface. Measuring the parameter in different regions allows for a higher resolution of the wall thickness or of the forming surface and, thus, of the previous lubrication. For example, it may be determined for each zone separately whether or not lubrication is necessary. At least one lubrication parameter, e.g. a required amount of lubricant, may be determined and/or set for each zone separately. This allows for a particularly exact lubrication and, thus, a particularly high quality. A high-resolution fine tuning of lubrication is enabled.

In particular, one value is determined for each region. This value may be a single measured value or an average of a plurality of measured values within the region. In the latter case, the accuracy is increased due to the higher resolution.

In one configuration it is taken into account that different regions of a glass item require different values of the lubrication parameters, e.g. amounts of lubricant. For example, the glass forming system may access information on how much lubricant is necessary for a specific region of a specific glass item and use this information for setting a respective lubrication parameter for this specific region.

In one embodiment, the glass forming system is configured to verify if a lubricating instruction sent to the lubricating device reflects in the measured parameter. In other words, the glass forming system verifies if a lubrication which should be performed has been performed (qualitative evaluation). In particular, it can be verified if an expected peak such as an intensity peak is visible in the measured parameter after the lubrication should have been performed. To this end, the glass forming system preferably comprises a verification device and/or is configured to access lubrication instructions sent to the lubricating device. An evaluation and/or control device may be configured to send lubrication instructions to the lubrication device and/or comprise said verification device.

If a lubrication instruction is not reflected in the measured parameter, i.e., if no peak is visible when there should be a visible peak, a malfunction of the lubricating device may have occurred. Such a malfunction can be detected immediately. Thus, the quality of the glass items can be kept high and scrap can be reduced.

In one embodiment, the glass forming system is configured to determine, on the basis of the measured parameter, if a lubrication has been performed correctly. In this embodiment, the glass forming system evaluates the lubrication quantitatively. In particular, it can be determined if a peak height of the measured parameter corresponds to an expected peak height. An expected peak height may for example be determined by an average of previous peak heights. For example, a rolling average may be used. To this end, the glass forming system preferably comprises a determining device, e.g. as a part of an evaluation and/or control device, and/or is configured to access previous data of the measured parameter. In particular, the glass forming system comprises a data storage unit, in which a time series of the measured parameter and/or a rolling average of the measured parameter is stored. Said data storage unit may be part of or connected with an evaluation and/or control device.

If a peak is too low, lubrication may have been performed insufficiently. This may be caused by a blocked nozzle, for example. Such a fault can be detected immediately. Thus, the quality of the glass items can be kept high and scrap can be reduced.

In one embodiment, the measuring device is configured to measure a thermal image of the formed glass item or of the forming surface. A thermal image gives an "intensity" value which increases with increasing temperature and which increases with increasing wall thickness. The measuring device measures a thermal image of at least a part, in particular of the entire formed glass item. In particular, the measuring device uses an infrared camera, preferably a high-resolution infrared camera. A too low intensity value may indicate a too small wall thickness of the glass item. It has been found that thermal images are particularly suitable to evaluate a lubrication state of a forming surface.

In one configuration, the measuring device comprises two or more measuring devices, such as infrared cameras, which may be positioned to perform measurements, for example to capture thermal images, of a formed glass container, in particular from different positions and/or angles. In one configuration, two or more measuring devices are provided which are suitable to measure different parameters relating to the wall thickness or of the forming surface.

Several or all points of a thermal image may be averaged to calculate a single value for the measured parameter. This may be performed for the whole glass item, i.e., for the whole mould, or for each region of a glass item, i.e., for each region of a mould.

In particular, the intensity value is measured for each formed glass item, i.e., at intervals over time. Peaks and dips in the intensity value allow permit conclusions about if and to what extent lubrication has been performed. In particular, a peak represents a glass item formed after lubrication.

In one embodiment, a neural network is used to evaluate a measured parameter of a currently formed glass item or of the forming surface. In particular, the neural network takes into account a time series of measured parameters of previously formed glass items or of the forming surface. The neural network evaluates the current lubrication state, in particular taking into account previous lubrication states. For example, a one-hour window of the previously measured parameter may be used. Typically, a time series is used in which the latest measured value relates to the currently formed glass item. The neural network may be used for qualitative and/or quantitative evaluation of the measured parameter. A result of the evaluation performed by the neural network may be used to control lubrication.

In one configuration, the neural network is used to determine whether or not a current glass item has been formed using a freshly lubricated forming surface or region of forming surface ("swab" or "no swab"). In one configuration, the neural network is used to determine if a current glass item has been formed using a forming surface or region of forming surface that requires lubrication.

Training data for training the neural network may for example be one or more time series of a previously measured parameter, in particular using the same glass forming system, in which occurrence of lubrication and/or lubrication parameters such as lubricant amounts of respective lubrication events are known.

Depending on the measured values it may be hard to determine when lubrication has been performed. Intensity plots may vary from steady to chaotic, there may be regions without any discernible peaks or dips, and the regions showing discernible peaks or dips may change. It has been found that a neural network allows for a very accurate evaluation. In addition, training of the neural network can be performed comparatively easily, as instructions to the lubricating device can easily be evaluated to gain knowledge about past lubrication events.

In one configuration, measured values are provided for a plurality of regions. If lubrication is always performed for all regions simultaneously, the neural network takes into account all regions to evaluate the measured parameter. This leads to an increased accuracy in determining if lubrication has been performed. If lubrication is performed separately for each region, each region can be individually analysed. Analysis can be performed simultaneously for all regions.

In one embodiment, the lubricating device is provided as a lubricating robot configured for multi-axle translational and/or rotational movement of at least one lubrication element. The lubricating robot is configured to rotate the at least one lubrication element around one or more axes and/or to translate the at least one lubrication element along one or more axes. In total, movement is possible around at least two axes. Thus, a completely automated lubrication robot may be provided which can automatically perform the desired lubrication operations, in particular when controlled by a control device for the lubricating robot. This enables a particularly reproducible and, thus, high-quality glass formation. The control device for the lubricating robot may be part of or connected with an evaluation and/or control device.

The lubrication element is an element for applying lubricant to the forming surface. The lubrication element is preferably a nozzle for spraying lubricant. However, the lubrication element may alternatively be a lubrication wipe, a lubrication brush or a burner for generating a soot-containing flame, e.g. by burning acetylene.

In one embodiment, the glass forming system comprises a plurality of moulds for glass forming, each mould having one or more forming surfaces. One lubricating device is used for lubricating the plurality of forming surfaces and/or one measuring device is used for measuring the parameter.

A mould may for example be a blank mould and/or a blow mould. In particular, a lubricating robot is used. The measured parameter is typically assigned to the respective forming surface or mould so that a lubrication state of the respective forming surface or mould is known. The parameter may be measured for each forming surface or mould and for each formed glass item.

In one configuration, the glass forming system comprises a blank mould. In particular, the forming surface is a surface of the blank mould. In one configuration, the glass forming system comprises a neck ring. In particular, the forming surface is a surface of the neck ring. In one configuration, the glass forming system comprises a plunger. In particular, the forming surface is a surface of the plunger. In one configuration, the glass forming system comprises a baffle. In particular, the forming surface is a surface of the baffle. In one configuration, the glass forming system comprises a deflector. In particular, the forming surface is a surface of the deflector.

In one configuration, the glass forming system comprises a blank station having a plunger and a blank mould, wherein the forming of a glass item comprises bringing a gob of molten glass into the blank mould, e.g. by means of a glass feeding device, and moving the plunger up to an end position. In this case, the forming surface is typically part of the blank mould and the glass item is typically a parison. In another configuration, the glass forming comprises a blow station, the forming surface is typically part of the blow station, and the glass item is typically a container.

A further aspect of the invention is a method for manufacturing formed glass items. The method comprises forming a glass item using a forming surface of a glass forming system, measuring a parameter relating to a wall thickness of the formed glass item or of the forming surface, and evaluating and/or controlling lubrication of the forming surface performed by a lubricating device on the basis of the measured parameter. All features, advantages and configurations of the glass forming system disclosed above may also apply to the method and vice versa.

In one embodiment, the method further comprises deciding, on the basis of the measured parameter, whether or not lubrication is necessary. In one embodiment, the method further comprises lubricating the forming surface on the basis of the measured parameter, wherein at least one lubrication parameter is set on the basis of the measured parameter. In particular, lubrication is performed in case it is decided that lubrication is necessary. In one embodiment, the method further comprises determining, on the basis of the measured parameter, if a lubrication has been performed correctly.

A further aspect of the invention is a use of a measuring device for measuring a parameter relating to a wall thickness of a formed glass item or of a forming surface for forming glass items, wherein a lubrication of the forming surface is evaluated and/or controlled on the basis of the measured parameter. All features, advantages and configurations of the glass forming system and the method disclosed above may also apply to the use.

The invention is illustrated with the aid of the following examples, with reference to the appended drawings. The figures show:
- Fig. 1: a blank station at the beginning of the production of a parison;
- Fig. 2: a blank station during the production of a parison;
- Fig. 3: a blank station at the end of the production of a parison;
- Fig. 4: a blow station at the beginning of the production of a glass bottle;
- Fig. 5: a blow station at the end of the production of the glass bottle;
- Fig. 6: a schematic representation of a measuring device and a formed glass bottle;
- Fig. 7: a schematic representation of a lubricating device during lubrication;
- Fig. 8: a schematic representation of a lubricating device during another lubrication;
- Fig. 9: a time series of measured data; and
- Fig. 10: a schematic representation of a glass forming system.

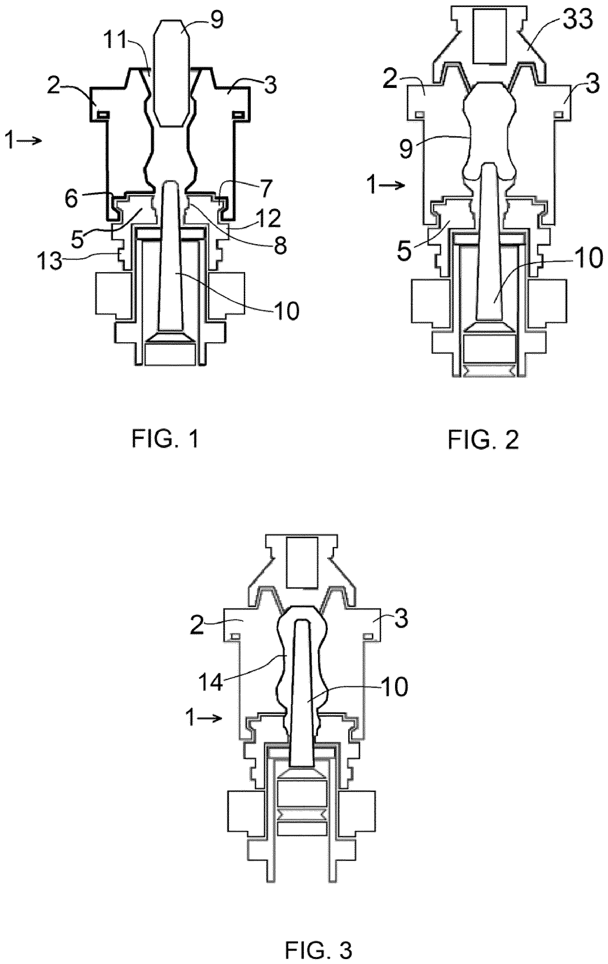

Figures 1 to 5 schematically illustrate the production of a glass bottle using different parts of a glass forming system. Figure 1 shows a part of a glass forming system, namely at least a part of a blank station. Figure 1 shows one blank mould 1 of the blank station. The blank mould 1 consists of two blank mould halves 2 and 3. The blank mould halves 2 and 3 are in a closed position. The two blank mould halves 2 and 3 are closed by a neck ring 5 at the lower end of the blank mould 1. The blank mould 1 has an upper opening 11 on its upper side. As shown in figure 1, a gob of molten glass 9 can be brought into the blank mould 1 from above through the upper opening 11, e.g. by gravity.

There is an annular recess 6 formed by the two halves 2, 3 when the two halves 2 and 3 are in their closed position. The neck ring 5 comprises an upper annular projection 7. The upper annular projection 7 extends into the annular recess 6 when the two halves 2, 3 are in their closed position. In the closed position of the two halves 2, 3, these are then fixed by positive locking with the neck ring 5. The neck ring 5 may include a flange 12 on which the mould 1 can rest. Further, the neck ring 5 may include a lower annular projection 13 in order to be able to connect the neck ring 5 positively with an arm of an invert mechanism.

The inner wall of the neck ring 5 can have a bulge 8. A parison 14 can be held by this bulge 8, as shown in figure 3.

The blank station includes a plunger 10. According to figure 1, the plunger 10 is in an initial position. The plunger 10 reaches through the neck ring 5. The plunger 10 tapers in the direction of the mould 1. When the plunger 10 is in the initial position the plunger 10 ends close to the bottom of the mould 1 as well as above the bottom of the mould 1 as shown in figure 1.

As soon as the gob of molten glass 9 is completely in the mould 1, the upper opening 11 of the mould 1 is closed by a baffle 33 as shown in figure 2. After the upper opening 11 has been closed, the plunger 10 is moved upwards, i.e. further into the mould 1. This upward movement of the plunger 10 is illustrated in figures 2 and 3. The gob of molten glass 9 thus becomes a parison 14 inside the blank mould 1. The parison 14 is shown in figure 3.

Once the parison 14 has been formed, the mould 1 is opened. The baffle 33 and the two halves 2 and 3 of the mould 1 are removed from the parison 14. The parison 14 remains on the neck ring 5. In particular, the parison 14 is held by the bulge 8 of the neck ring 5. For example, the baffle 33 is removed from or pulled out of the parison 14 first. After that the two halves can be moved away into the open position.

It can be seen that the blank station comprises several forming surfaces, such as the glass-contacting surfaces of the blank mould halves 2 and 3, the baffle 33, the plunger 10 and the neck ring 5.

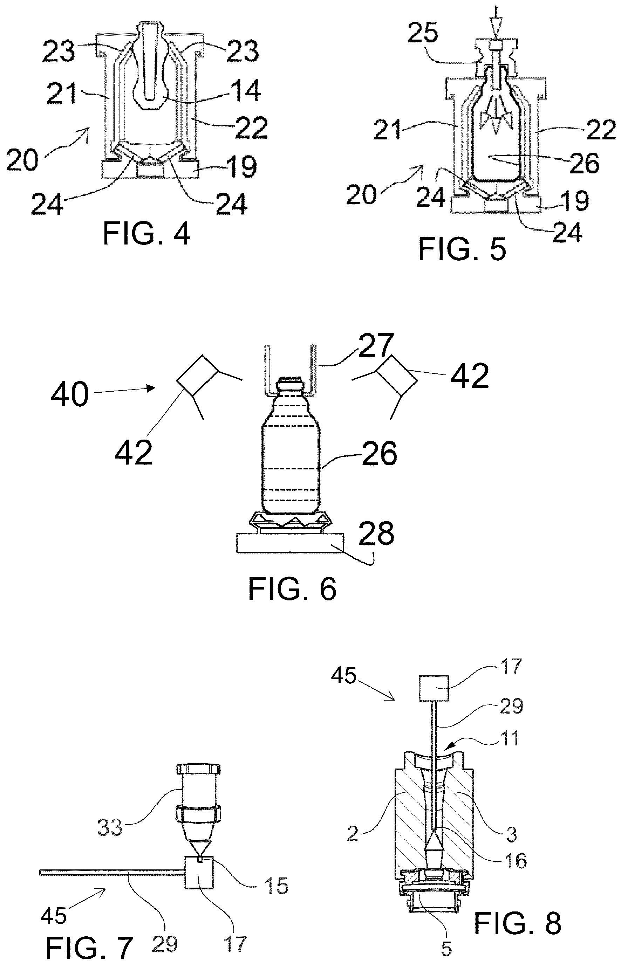

An invert mechanism (not shown) may transfer the neck ring together with the parison to a blow station 20. Said transfer may include a rotation by 180 degrees. The parison 4 may be brought to a base 19 of a blow station 20 which is shown in figures 4 and 5 depicting a further part of a glass forming system. The parison 14 is then located above this base 19. However, in contrast to figure 4, the blow mould halves 21 and 22 of the blow mould may be in an opened position when the parison 4 is brought into the blow station 20.

After the parison 14 has been brought to the base 19, the two halves 21 and 22 may be moved to the parison 14 into the shown closed position. Then, the parison 14 is inside the blow mould 21, 22 as shown in figure 4. When the parison 14 is inside the blow mould 21, 22, the neck ring 5 may be removed.

The two halves 21 and 22 may comprise a double wall. A gap 23 remains between the two walls of the double wall. The inner wall of the double wall is perforated or otherwise air-permeable. The base 19 may comprise ducts 24 through which air can be sucked out of each gap 23.

A blow head 25 is then placed on the two halves 21 and 22 of the blow mould. Air is then pumped through the blow head 25, inflating the parison into a glass item 26, namely a bottle, as shown in figure 5. Inflating can be supported by sucking air through the ducts 24. After the glass item 26 has been inflated, the blow head 25 as well as the two halves 21 and 22 of the blow mould are removed. The glass item 26 can then be gripped by a take out 27 and placed on a ground 28, for example a conveyor belt, as illustrated in figure 6.

It can be seen that the blow station comprises several forming surfaces, such as the glass-contacting surfaces of the blow mould halves 21 and 22 and at least parts of the blow head 25.

Figure 6 illustrates a measurement by means of a further part of a glass forming system. Figure 6 shows the formed glass item 26 and the measuring device 40. The measuring device may comprise one or two infrared cameras 42 configured to measure a thermal image of the formed glass item 26. When using more than one infrared camera 42, measured values of all used infrared cameras 42 are preferably combined in one common value. It is shown that the glass item 26 is subdivided in eight virtual regions which are located in eight different height positions by means of parallel dashed lines. The measuring device 40 is configured such that thermal images of each region can be measured and/or analysed independently. In particular, representative values such as average thermal intensities can be determined individually for each region.

Figures 7 and 8 illustrate the swabbing or lubrication of different forming surfaces by means of further parts of a glass forming system. Figures 7 and 8 show a lubricating device 45 during lubrication of different forming surfaces. The lubricating device is exemplarily illustrated as a spray bracket 17 having lubrication elements, namely nozzles 15, 16 for spraying lubricant. An oil-graphite mixture may be used as lubricant. The spray bracket 17 may be rotated around one or more axes and/or translated along one or more axes in by a moving apparatus of the lubricating device, e.g. to reach different glass forming stations of the glass forming system. Thus, the lubricating device is configured as a lubricating robot.

A first nozzle 16 is arranged on a free end of a rod-shaped extension 29 in order to lubricate the blank mould and/or the neck ring 5, as shown in figure and 8. A second nozzle is located on the spray bracket 17 for lubricating the baffle 33 as shown in figure 7. Alternatively, the second nozzle may be arranged on another extension (not shown) of the spray bracket 17. A triangle at each nozzle 15, 16 shows the respective spraying of the lubricant.

For lubricating the blank mould, as depicted in figure 8, the spray bracket 17 moves downwards, while the first nozzle 16 sprays lubricant in axial and radial directions. After the blank mould has been lubricated, the blank mould halves 2 and 3 may be opened and the neck ring 5 may be lubricated. The upper surface of the neck ring as well as the circumferential inner surface of the neck ring may be lubricated in this way. For lubricating the upper surface, the distance between the first nozzle 16 and the neck ring is large enough so that the predetermined spray angle of the first nozzle 16 sprays lubricant onto the desired region.

Lubrication of other forming surfaces may be carried out in a similar way using the shown nozzles 15, 16, further nozzles, and/or different lubrication elements.

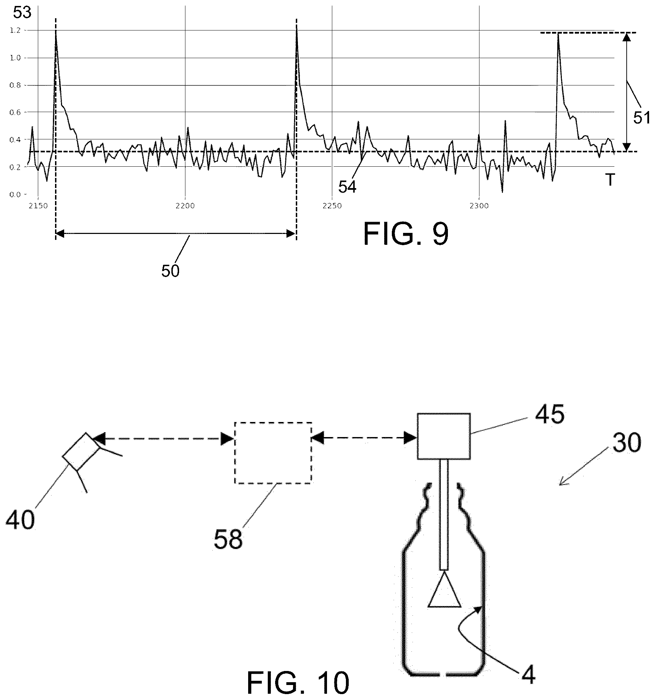

Figure 9 shows a time series of a measured parameter with annotations. The graph depicts the infrared intensity 53 over time T, for example the thermal intensity of a glass item or a region of a glass item as measured with one or two infrared cameras as shown in Figure 6. Peaks in the graph reflect when lubrication has been performed. The time between two peaks represents the lubrication interval 50. A horizontal dashed line represents an average 54 which may be an arithmetic mean, for example. The difference between a peak intensity and the average 54 is a measure for lubrication intensity 51.

Fig. 10 is a schematic representation of a glass forming system 30 according to the invention. A glass forming surface 58 is shown, for example as part of a blow mould. The system further comprises a measuring device 40 for measuring a parameter relating to a wall thickness of a formed glass item and a lubricating device 45 which may both be in data connection with an evaluation and/or control device 58 which may be part of the glass forming system 30. Data can be transmitted in one or both directions between the measuring device 40 and the evaluation and/or control device 58 and/or between the lubricating device 45 and the evaluation and/or control device 58.

For example, one or more measured parameters can be transmitted from the measuring device 40 to the evaluation and/or control device 58. On the other hand, the evaluation and/or control device 58 may send a measuring instruction to the measuring device 40. Evaluation of the lubrication state can be performed, e.g. taking into account lubrication instructions sent to or received from the lubricating device 45. Additionally or alternatively, lubrication instructions can be sent from the evaluation and/or control device 58 to the lubricating device 45 to control lubrication based on at least one measured parameter.

**List of reference signs**

| | |
|---|---|
| blank mould | 1 |
| blank mould halves | 2, 3 |
| forming surface | 4 |
| neck ring | 5 |
| annular recess | 6 |
| upper annular projection | 7 |
| bulge | 8 |
| gob of molten glass | 9 |
| plunger | 10 |
| upper opening | 11 |
| flange | 12 |
| lower annular projection | 13 |
| parison | 14 |
| second nozzle | 15 |
| first nozzle | 16 |
| spray bracket | 17 |
| base | 19 |
| blow station | 20 |
| blow mould halves | 21, 22 |
| gap | 23 |
| duct | 24 |
| blow head | 25 |
| glass item | 26 |
| take out | 27 |
| ground | 28 |
| extension | 29 |
| glass forming system | 30 |
| baffle | 33 |
| measurement device | 40 |
| infrared camera | 42 |
| lubricating device | 45 |
| lubrication interval | 50 |
| lubrication Intensity | 51 |
| infrared Intensity | 53 |
| average | 54 |
| evaluation and/or control device | 58 |
| time | T |

## Claims

1. Glass forming system (30), comprising a forming surface (4) for forming glass items (14, 26), a lubricating device (45) for lubricating the forming surface (4) and a measuring device (40) for measuring a parameter relating to a wall thickness of a formed glass item (14, 26) or to the forming surface (4), wherein the glass forming system (30) is configured such that a lubrication performed by the lubricating device (45) can be evaluated and/or controlled on the basis of the measured parameter.

2. Glass forming system (30) according to claim 1, **characterized in that** the glass forming system (30) is configured such that a decision is made, on the basis of the measured parameter, whether or not lubrication is necessary.

3. Glass forming system (30) according to one of the preceding claims, **characterized in that** the glass forming system (30) is configured such that at least one lubrication parameter is set on the basis of the measured parameter.

4. Glass forming system (30) according to the preceding claim, **characterized in that** the lubrication parameter is an amount of lubricant used for lubrication.

5. Glass forming system (30) according to one of the two preceding claims, **characterized in that** a lubrication interval is increased when the measured parameter exceeds a predefined threshold.

6. Glass forming system (30) according to one of the preceding claims, **characterized in that** the measuring device (40) is configured to measure the parameter in different regions of the formed glass item (14, 26) or of the forming surface (4), in particular in different height positions of the formed glass item (14, 26) or of the forming surface (4).

7. Glass forming system (30) according to one of the preceding claims, **characterized in that** the glass forming system (30) is configured to verify if a lubricating instruction sent to the lubricating device (45) reflects in the measured parameter,

8. Glass forming system (30) according to one of the preceding claims, **characterized in that** the glass forming system (30) is configured to determine on the basis of the measured parameter if a lubrication has been performed correctly.

9. Glass forming system (30) according to one of the preceding claims, **characterized in that** the measuring device (40) is configured to measure a thermal image of the formed glass item (14, 26) or of the forming surface (4).

10. Glass forming system (30) according to one of the preceding claims, **characterized in that** a neural network is used to evaluate a measured parameter of a currently formed glass item (14, 26) or of the forming surface (4), wherein the neural network in particular takes into account a time series of measured parameters of previously formed glass items (14, 26) or of the forming surface (4).

11. Glass forming system (30) according to one of the preceding claims, **characterized in that** the lubricating device (45) is provided as a lubricating robot configured for multi-axle translational and/or rotational movement of at least one lubrication element.

12. Glass forming system (30) according to one of the preceding claims, **characterized in that** the glass forming system (30) comprises a plurality of moulds for glass forming, each mould having one or more forming surfaces (4), wherein one lubricating device (45) is used for lubricating the plurality of forming surfaces (4) and one measuring device (40) is used for measuring the parameter.

13. Method for operating a glass forming system (30), the method comprising
- Forming a glass item (14, 26) using a forming surface (4) of a glass forming system (30),
- Measuring a parameter relating to a wall thickness of the formed glass item (14, 26) or to the forming surface (4),
- Evaluating and/or controlling lubrication of the forming surface (4) performed by a lubricating device on the basis of the measured parameter.

14. Method according to the preceding claim, further comprising
- Deciding, on the basis of the measured parameter, whether or not lubrication is necessary, and/or
- Lubricating the forming surface (4) on the basis of the measured parameter, wherein at least one lubrication parameter is set on the basis of the measured parameter.

15. Use of a measuring device (40) for measuring a parameter relating to a wall thickness of a formed glass item (14, 26) or to a forming surface (4) for forming glass items (14, 26), wherein a lubrication of the forming surface (4) is evaluated and/or controlled on the basis of the measured parameter.
